# EUROPÄISCHE PATENTSCHRIFT

(11) **EP 1 800 989 B1**
(45) Veröffentlichungstag und Bekanntmachung des Hinweises auf die Patenterteilung: **23.11.2011**
(21) Anmeldenummer: 06026022.1
(22) Anmeldetag: 15.12.2006
(51) Int. Cl.: B62B 3/18

(54) **Einkaufswagen**
Shopping trolley
Chariot

(30) Priorität: 23.12.2005 DE 102005062343
(43) Veröffentlichungstag der Anmeldung: 27.06.2007
(73) Patentinhaber: Wanzl Metallwarenfabrik GmbH, 89336 Leipheim (DE)
(72) Erfinder: Thalhofer, Armin, 89312 Günzburg/Wasserburg (DE)

(56) Entgegenhaltungen:
- EP-A- 0 676 323
- EP-A- 0 751 057
- DE-A1- 10 028 627
- DE-U1- 29 712 670

## Beschreibung

Die Erfindung betrifft einen stapelbaren Einkaufswagen mit einer Abstelleinrichtung mit den Merkmalen im Oberbegriff.

Eine große Anzahl an Einkaufswagen weist zur Ablage insbesondere für Kisten oder schrumpfverpackte Flaschengebinde eine Abstelleinrichtung auf, die um eine horizontale Achse verschwenkbar ist und sich mittels zweier Tragarme nach hinten von einer Nichtgebrauchslage in eine Gebrauchslage bewegen lässt. Damit die Abstelleinrichtung insbesondere in Gebrauchslage gesichert ist, sind so genannte Haltemittel vorgesehen. Ein Einkaufswagen gemäß dem Oberbegriff des Anspruchs 1 mit wenigstens einem Haltemitteln ist beispielsweise in der europäischen Patentschrift EP 1 208 029 B1 beschrieben. Dieses Haltemittel ist vorzugsweise an einem der beiden Tragarme, insbesondere an einer der beiden Längsseiten des Fahrgestelles oder an einer vordersten Begrenzung der Abstellfläche vorgesehen.

Jedoch ist diese Anordnung mit Nachteilen behaftet. Beispielsweise ist keine dauerhafte Halterung der Abstelleinrichtung in der Nichtgebrauchslage gegeben, da oft ein Abrieb am Haltemittel eintritt. Dadurch bleibt die Abstelleinrichtung nicht mehr, wie gewünscht, in der Nichtgebrauchslage, sondern befindet sich permanent in Gebrauchslage und wirkt sich störend beim Fahren und beim Stapeln der Wagen aus.

Die Aufgabe der Erfindung besteht daher darin, einen besseren Einkaufswagen mit einer Abstelleinrichtung aufzuzeigen.

Die Erfindung löst diese Aufgabe mit den Merkmalen im Hauptanspruch.

Die weitere Erhöhung des Haltemittels fixiert den Tragarm und somit die komplette Abstelleinrichtung.

Weitere Vorteile sind der Beschreibung der Beispiele zu entnehmen.

Die Erfindung wird anhand von Ausführungsbeispielen näher erläutert. Es zeigt
- Fig. 1: Ausschnitt eines Einkaufswagens in Seitenansicht mit einer Abstelleinrichtung, fixiert durch ein Haltemittel;
- Fig. 2: das Haltemittel, zweidimensional in verschiedenen Ansichten;
- Fig. 3: dasselbe Haltemittel, angeordnet an einem Umrandungsdraht und einem horizontal verlaufenden Draht eines Korbes.

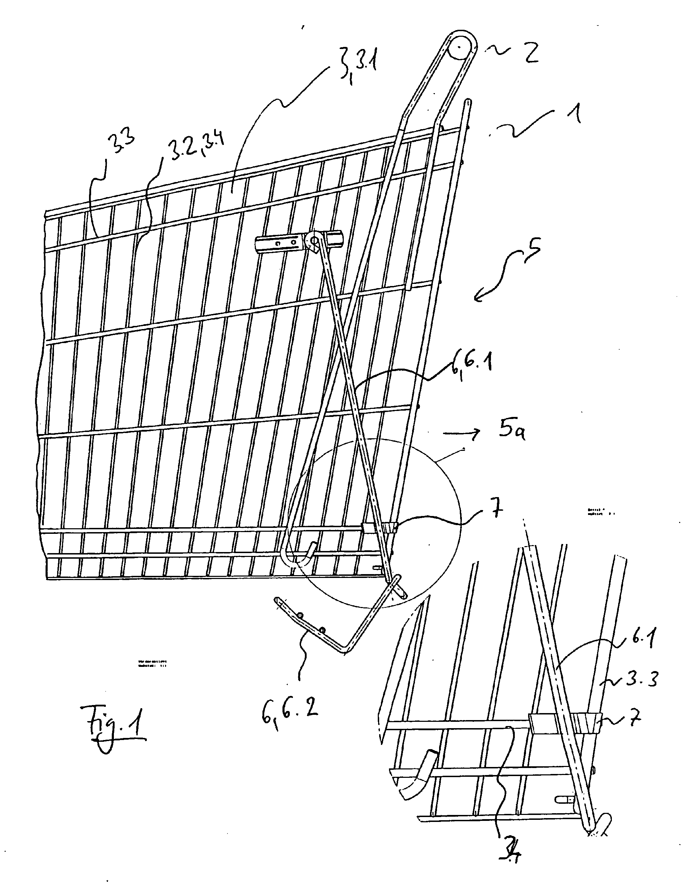

In Fig. 1 ist der Ausschnitt eines Einkaufswagens 1 dargestellt, der eine Schiebeeinrichtung 2 und einen Korb 3 aufweist. Der Korb 3, zur Aufnahme von Ware, ist aus Seitenwänden 3.1 gebildet, die aus Drähten 3.2 bestehen. Hierbei gibt es vertikal verlaufende Drähte 3.3 und horizontal verlaufende Drähte 3.4. Der letzte vertikal verlaufende Draht ist der so genannte Umrandungsdraht 3.3. Jeder Wagen weist ein Fahrgestell 4 mit Rollen auf, das der Einfachheit halber nicht dargestellt ist.

Im rückwärtigen Bereich 5 des Einkaufswagens 1 ist eine Abstelleinrichtung 6 zur weiteren Aufnahme von Ware angeordnet. Diese weist zwei Lager 6.3 auf, die ortsfest an beiden Seiten der Seitenwände 3.1 des Korbes 3 angeordnet sind. Die Abstelleinrichtung 6 weist zwei Tragarme 6.1 auf, die an den Lagern 6.3 verschwenkbar angeordnet sind. Dadurch ist eine horizontale Achse gebildet, um die die Abstelleinrichtung 6 nach hinten 5a aus einer Nichtgebrauchslage in eine Gebrauchslage und wieder in die Nichtgebrauchslage geschwenkt werden kann. Zur Ablage der Ware ist eine Abstellfläche 6.2 vorgesehen.

In Fig. 1 befindet sich die Abstelleinrichtung 6 in einer Nichtgebrauchsstellung. Diese Stellung weist der Wagen 1 auf, wenn gleiche Wagen 1 ineinander gestapelt sind. Für das Abstellen von weiteren Waren wie beispielsweise einer Flaschenkiste oder schrumpfverpackten Flaschengebinden ist die Abstelleinrichtung 6 in Gebrauchslage.

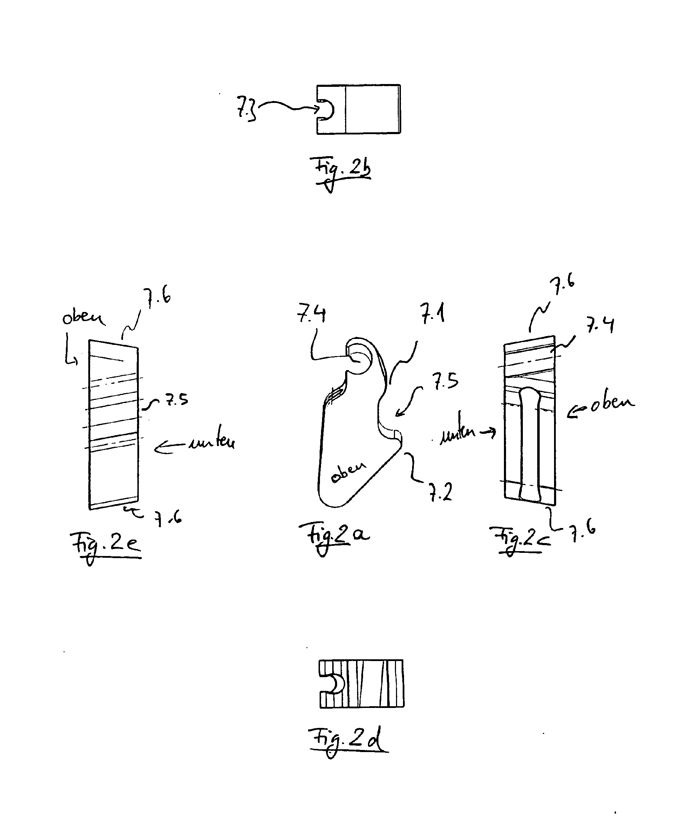

Eine Begrenzung in Bezug auf die Beweglichkeit der Abstelleinrichtung 6 ist durch ein Haltemittel 7 gegeben. Das Haltemittel 7 ist in Fig. 1 dargestellt und verdeutlicht die Position am Einkaufswagen 1. In Fig. 2 a-e ist es detailliert in allen Ansichten dargestellt.

Das Haltemittel 7 weist eine vordere Erhöhung 7.1 und eine weitere, hintere Erhöhung 7.2 auf. Zwischen beiden befindet sich eine Mulde 7.5, die für die Lagerung des Tragarms 6.1 der Abstelleinrichtung 6 in Nichtgebrauchslage vorgesehen ist. Diese Mulde 7.5 weist vorzugsweise eine nicht symmetrische Form auf, wie auch aus Fig. 2a ersichtlich. Die Form und Größe der Mulde 7.5 richtet sich nach dem Durchmesser des Tragarms 6.1 und ist begrenzt durch die vordere Erhöhung 7.1 und die weitere hintere Erhöhung 7.2. Um ein sicheres Anliegen des Tragarms 6.1 zu gewährleisten, ist die hintere Erhöhung 7.2 vorgesehen.

Das Haltemittel 7 weist des Weiteren eine Öse 7.4 auf, mit der es an einen vertikal verlaufenden Draht 3.3, vorzugsweise den Umrandungsdraht 3.3 der Seitenwand 3.1, angeklipst wird.

Weiterhin ist das Haltemittel 7 mit einer Ausnehmung 7.3 versehen, mit der es an einen horizontal verlaufenden Draht 3.4 gesteckt wird.

Aufgrund der Öse 7.4 und der Ausnehmung 7.3 ist ein Wackeln oder Verrutschen des Haltemittels 7 ausgeschlossen. Es bleibt dem Fachmann überlassen, an welchen der horizontal verlaufenden Drähte 3.2 das Haltemittel 7 anzuknipsen ist. Vorzugsweise ist der zweite horizontal verlaufende Draht 3.4 zu wählen. Dieser hat den Vorteil, wie in Fig. 1 ersichtlich, dass der Abstand zwischen Umrandungsdraht 3.3 und dem Bereich zwischen einer Erhöhung 7.1 und einer weiteren Erhöhung 7.2 des Haltemittels 7 kleinstmöglich gehalten ist.

Eine Fixierung des Haltemittels 7 ist dann gegeben, wenn gleiche Wagen ineinander gestapelt geparkt sind. Dann wird durch einen zweiten Wagen, der in eine Reihe bereits parkender Wagen geschoben wird, eine Kraft auf das Haltemittel 7 ausgeübt. Dadurch ist ein Wackeln oder Verrutschen des Haltemittels 7 unterbunden.

Von der Erhöhung 7.1 zur Öse 7.4 ist der Bereich, wie auch in Fig. 2a dargestellt, vorzugsweise nicht symmetrisch gestaltet. Eine schräg verlaufende und abgeflachte Form ist vorzuziehen. Der Tragarm 6.1 der Abstelleinrichtung 6 ist dadurch leichter in die Mulde 7.5 zu bewegen, weiterhin ist ein längerer Weg gegeben um den Tragarm 6.1 aus der Fixierung in der Mulde 7.5 wieder zu lösen. Somit ist ein selbständiges Bewegen des Tragarmes 6.1 aus der Mulde 7.5 nahezu unterbunden.

Auch die Erhöhung 7.2 ist nicht entlang einer Ebene geführt. Die Asymmetrie, wie auch schon bei der Erhöhung 7.1 wird hier aufgegriffen, wobei eine Parallelität der Asymmetrie gegeben ist. Erhöhung 7.2 und 7.1 verlaufen parallel zueinander asymmetrisch. In welche Richtung die Asymmetrie und in welchem Winkel diese gestaltet ist, ist abhängig von der vorgesehenen Anordnung am Wagen. Vorzugsweise ist eine Richtung wie in Fig. 2a dargestellt, von unten weiter hinein in die Mulde 7.5 empfehlenswert. Auch Fig. 2e zeigt von einer anderen Ansicht noch einmal die Anordnung der Mulde 7.5.

Die Öse 7.4 ist dann entsprechend entgegensetzt zu dieser Anordnung der Erhöhung 7.2 vorgesehen. Dadurch ist eine verstärkende Fixierung gegeben. Wie aus Fig. 2a ersichtlich, liegen jeweils die unteren Enden von Öse 7.4 und Erhöhung 7.2 enger beieinander, als die oberen Enden von Öse 7.4 und Erhöhung 7.2. Die Asymmetrie der Öse 7.4 ist natürlich auch bedingt durch die Anordnung des Umrandungsdrahtes 3.3, der in einem bestimmten Winkel den Abschluss des Korbes 3 bestimmt. Fig. 2c zeigt exemplarisch den Verlauf der Öse 7.4.

Aus den Figuren 2c und 2e ist weiterhin ersichtlich, dass das Haltemittel 7 an seinen Enden 7.6 mit einer Asymmetrie versehen ist. Der Winkel dieser ist abhängig von der Anordnung des Umrandungsdrahtes 3.3 und wieder aufgegriffen in der Gestaltung der Öse 7.4 .

### Bezugszeichenliste

- 1: Einkaufswagen
- 2: Schiebeeinrichtung
- 3: Korb
- 3.1: Seitenwand
- 3.2: Drähte
- 3.3: vertikal verlaufende Draht, Umrandungsdraht
- 3.4: horizontal verlaufender Draht
- 4: Fahrgestell mit Rollen
- 5: rückwärtigen Bereich
- 5a: hinten
- 6: Abstelleinrichtung
- 6.1: Tragarm
- 6.2: Abstellfläche
- 7: Haltemittel
- 7.1: Erhöhung, vordere Erhöhung
- 7.2: weitere Erhöhung, hintere Erhöhung
- 7.3: Ausnehmungen
- 7.4: Öse
- 7.5: Mulde
- 7.6: Enden

## Patentansprüche

1. Stapelbarer Einkaufswagen (1) mit einer Schiebeeinrichtung (2) und mit einem Fahrgestell (4), das einen Korb (3) mit aus Drähten (3.2) gebildeten Seitenwänden (3.1) und mit einer im rückwärtigen Bereich (5) des Einkaufswagens (1) befindlichen, zur Aufnahme weiterer Ware bestimmten und um eine horizontale Achse verschwenkbaren Abstelleinrichtung (6), die sich nach hinten (5a) aus einer Nichtgebrauchslage in eine Gebrauchslage und manuell wieder zurück bewegen lässt, wobei die mit Tragarmen (6.1) und mit einer Abstellfläche (6.2) ausgestattete Abstelleinrichtung (6) ähnlich einer Schaukel gestaltet ist, und wobei wenigstens ein Haltemittel (7) vorgesehen ist, das schnappschlüssig und ortsfest an mehreren Drähten (3.2) insbesondere an einem Umrandungsdraht (3.3) und einem horizontal verlaufenden Draht (3.4) des Korbes (3) angeordnet ist und mit einer Erhöhung (7.1) versehen ist, wobei die Erhöhung (7.1) verhindert, dass die Abstelleinrichtung (6) selbständig aus einer Nichtgebrauchslage in eine Gebrauchslage schwenkt, **dadurch gekennzeichnet, dass** jedes Haltemittel (7) eine weitere Erhöhung (7.2) aufweist.

2. Stapelbarer Einkaufswagen nach Anspruch 1, **dadurch gekennzeichnet, dass** jedes Haltemittel (7) eine Ausnehmung (7.3) aufweist.

3. Stapelbarer Einkaufswagen nach einem der Ansprüche 1 oder 2, **dadurch gekennzeichnet, dass** jedes Haltemittel (7) eine Öse (7.4) aufweist.

4. Stapelbarer Einkaufswagen nach einem der Ansprüche 1 bis 3, **dadurch gekennzeichnet, dass** jedes Haltemittel (7) eine Mulde (7.5) aufweist.

5. Stapelbarer Einkaufswagen nach einem der Ansprüche 1 bis 4, **dadurch gekennzeichnet, dass** die weitere Erhöhung (7.2) jedes Haltemittels (7) asymmetrisch gestaltet ist.

6. Stapelbarer Einkaufswagen nach Anspruch 1, **dadurch gekennzeichnet, dass** jedes Haltemittel (7) ein Oben und ein Unten aufweist, wobei die Öse (7.4) und die weitere Erhöhung (7.2) unten einen geringeren Abstand zueinander aufweisen als oben.

## Claims

1. A stackable shopping trolley (1) with a slide device (2) and with an undercarriage (4) which carries a basket (3) with lateral walls (3.1) formed from wires (3.2) and with a setting-down device (6) which is situated in the rear region (5) of the shopping trolley (1) and is intended to receive additional items and which is pivotable about a horizontal axis and can be moved towards the rear (5a) from a position of non-use into a position of use and back again manually, wherein the setting-down device (6) provided with support arms (6.1) and with a setting-down area (6.2) is designed in a manner similar to a swing, and wherein at least one retaining means (7) is provided which is arranged on a plurality of wires (3.2) with a snap closure and in a stationary manner, in particular on an edging wire (3.3) and a wire (3.4) of the basket (3) extending horizontally and is provided with a raised portion (7.1), wherein the raised portion (7.1) prevents the setting-down device (6) from spontaneously pivoting out of a position of non-use into a position of use, **characterized in that** each retaining means (7) has a further raised portion (7.2).

2. A stackable shopping trolley according to Claim 1, **characterized in that** each retaining means (7) has a recess (7.3).

3. A stackable shopping trolley according to one of Claims 1 or 2, **characterized in that** each retaining means (7) has an eyelet (7.4).

4. A stackable shopping trolley according to any one of Claims 1 to 3, **characterized in that** each retaining means (7) has a hollow (7.5).

5. A stackable shopping trolley according to any one of Claims 1 to 4, **characterized in that** the further raised portion (7.2) of each retaining means (7) is shaped asymmetrically.

6. A stackable shopping trolley according to Claim 1, **characterized in that** each retaining means (7) has a top and a bottom, wherein the eyelet (7.4) and the further raised portion (7.2) are at a shorter distance from each other at the bottom than at the top.

## Revendications

1. Chariot à provisions (1) du type imbricable, comprenant un dispositif de poussée (2) et un châssis de roulement (4) muni d'un panier (3) présentant des parois latérales (3.1) constituées de baguettes métalliques (3.2), ainsi qu'un dispositif de stockage (6) qui est destiné à recevoir des marchandises supplémentaires, est situé dans la région postérieure (5) dudit chariot à provisions (1), peut pivoter autour d'un axe horizontal et peut être mû vers l'arrière (5a), d'une position de non-utilisation à une position d'utilisation, puis rappelé manuellement en sens inverse, sachant que ledit dispositif de stockage (6), pourvu de bras de support (6.1) et d'une surface de stockage (6.2), offre une réalisation analogue à celle d'une balançoire, et sachant qu'il est prévu au moins un moyen d'arrêt (7) qui est monté, avec coopération par déclic et de manière fixe, sur plusieurs baguettes métalliques (3.2), en particulier sur une baguette métallique d'encadrement (3.3) et sur une baguette métallique (3.4) s'étendant horizontalement sur le panier (3), et est doté d'une zone proéminente (7.1), laquelle zone proéminente (7.1) empêche ledit dispositif de stockage (6) de pivoter, de lui-même, d'une position de non-utilisation à une position d'utilisation, **caractérisé par le fait que** chaque moyen d'arrêt (7) est pourvu d'une zone proéminente supplémentaire (7.2).

2. Chariot à provisions du type imbricable selon la revendication 1, **caractérisé par le fait que** chaque moyen d'arrêt (7) comporte un évidement (7.3).

3. Chariot à provisions du type imbricable selon l'une des revendications 1 ou 2, **caractérisé par le fait que** chaque moyen d'arrêt (7) présente un oeillet (7.4).

4. Chariot à provisions du type imbricable selon l'une des revendications 1 à 3, **caractérisé par le fait que** chaque moyen d'arrêt (7) possède une zone incurvée (7.5).

5. Chariot à provisions du type imbricable selon l'une des revendications 1 à 4, **caractérisé par le fait que** la zone proéminente supplémentaire (7.2) de chaque moyen d'arrêt (7) est de configuration asymétrique.

6. Chariot à provisions du type imbricable selon la revendication 1, **caractérisé par le fait que** chaque moyen d'arrêt (7) comprend une partie haute et une partie basse, l'oeillet (7.4) et la zone proéminente supplémentaire (7.2) présentant, en partie basse, un espacement mutuel moindre qu'en partie haute.
